# EUROPÄISCHE PATENTSCHRIFT

(11) **EP 1 351 580 B1**
(45) Veröffentlichungstag und Bekanntmachung des Hinweises auf die Patenterteilung: **15.12.2004**
(21) Anmeldenummer: 02729411.5
(22) Anmeldetag: 08.01.2002
(51) Int. Cl.: A23G 9/28

(54) **PORTIONIERER**
PORTIONER
DISTRIBUTEUR DE PORTIONS

(30) Priorität: 12.01.2001 CH 62012001; 15.08.2001 CH 150501
(43) Veröffentlichungstag der Anmeldung: 15.10.2003
(73) Patentinhaber: Intercontinental Marketing Services Far East Co. Ltd, 23536 R.O.C. Chung Ho City, Tapei (TW); MOHA MODERNE HAUSHALTWAREN AG, CH-3052 Zollikofen (CH)
(72) Erfinder: HERREN, Bruno, Jean, CH-6052 Hergiswil (CH); HORNG, Ruey-Lan, Yung-Kang City, Tainan Hsien (TW)
(74) Vertreter: Patentanwälte Feldmann & Partner AG
(86) Internationale Anmeldenummer: PCT/CH2002/000008
(87) Internationale Veröffentlichungsnummer: WO 2002/054883

(56) Entgegenhaltungen:
- DE-C- 803 238
- DE-U- 20 016 217
- US-A- 1 584 757
- US-A- 2 164 429

## Beschreibung

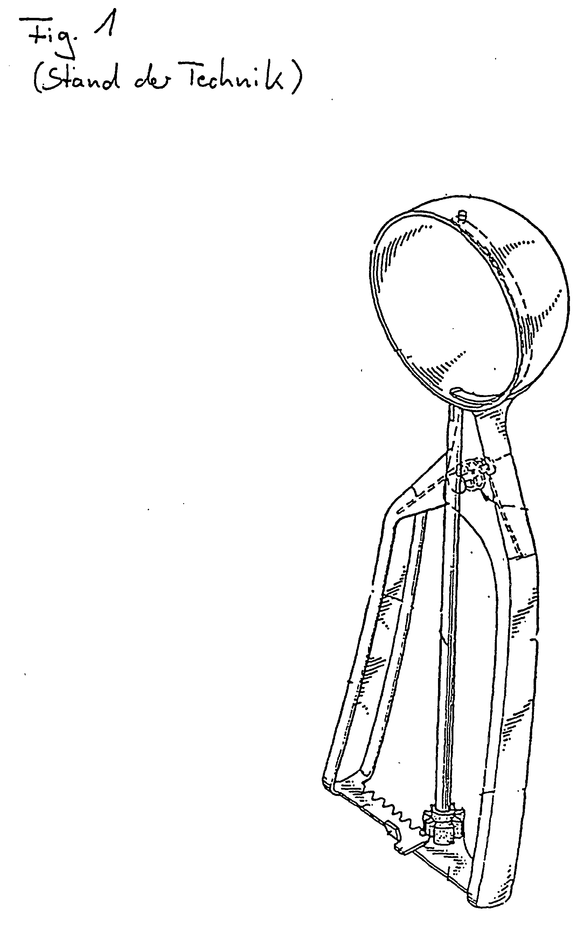

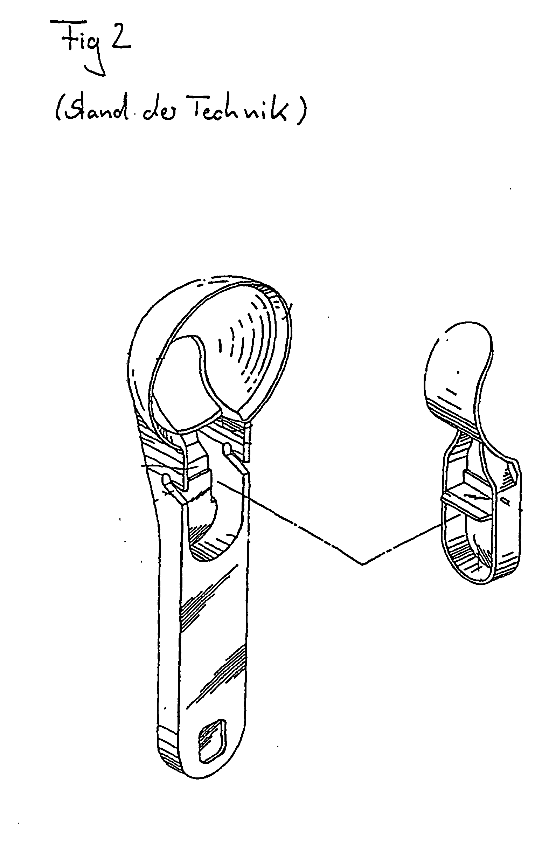

Die vorliegende Erfindung betrifft einen Portionierer zum Formen von kugelförmigen Nahrungsmittelportionen für Küche, Haushalt und Gastgewerbe, wie aus dem Dokument DE 200 16 217 U bekannt. Portionierer oder Eiskugelbereiter wie sie zum Beispiel in den Figuren 1 und 2 gezeigt sind, werden seit Jahren erfolgreich auf dem Markt angeboten. Sie dienen hauptsächlich zum Portionieren von Speiseeis, können aber auch für andere Nahrungsmittel verwendet werden, sofern diese eine geeignete pastöse Konsistenz aufweisen. Um sicher zu stellen, dass sich Speiseeis, Kartoffelpüree oder Dessertcremes in der gewünschten Kugelform im gewünschten Moment aus der halbkugelförmigen Portioniererschale lösen, weisen die bekannten Portionierer verschiedene mechanische Hilfsmittel auf. Der in Figur 1 dargestellte Portionierer ist mit einem bogenförmigen Messer ausgerüstet, das durch Zusammendrücken der Handgriffe in einer Schwenkbewegung entlang der Schaleninnenseite geführt wird und dadurch die Eiskugel aus der Schale lösen soll. Dies ist leider nicht immer der Fall. So kommt es häufig vor, dass sich beim Portionieren von Speiseeis nach kurzem Gebrauch die Eiskugeln nicht mehr aus der Schale lösen lassen, da sie so stark an der abgekühlten Metallschale anhaften, dass das Messer kaum mehr bewegt werden kann. Der Antriebsmechanismus des Messers macht zudem die Herstellung dieser Portionierer aufwändig und teuer und erlaubt den Einsatz von Plastikmaterialien nicht.

Diese Probleme sind bekannt und wurden zum Beispiel in der US-A-4'699'582 mittels eines Eiskugelbereiters, wie er in der Figur 2 dargestellt ist, versucht zu lösen. Hier werden die fertigen Kugeln mittels eines Auswerfers aus der Schale gedrückt. Ein zungenförmiger vorderer Teil des Auswerfers liegt in einer entsprechenden Vertiefung der Schale. Der Auswerfer ist in einem mittleren Teil mittels einer Achse schwenkbeweglich im Portionierergriff gelagert. Durch Druck auf den hinteren Teil des Auswerfers wird die Auswerferzunge aus ihrer Vertiefung gehoben und die fertige Kugel wird aus der Schale gedrückt. Um sicherzustellen, dass die Kugel wie gewünscht ausgeworfen wird, ist es nötig die Auswerferzunge genügend gross zu gestalten. Es kommt daher immer wieder vor, dass die Kugel zwar von der Innenwand der Schale gelöst wird, aber dann an der Zunge kleben bleibt. Ausserdem sammeln sich unter dem Auswerfer, vor allem im Griffbereich Nahrungsmittelreste an, welche während des Gebrauchs und ohne zerlegen des Eiskugelbereiters nicht entfernt werden können.

Der vorliegenden Erfindung liegt daher die Aufgabe zugrunde eine Vorrichtung zu schaffen die diese Nachteile nicht aufweist.

Diese Aufgabe wird durch eine Vorrichtung gemäß der kennzeichnenden Merkmale des Anspruches 1 gelöst.

Weitere vorteilhafte Ausführungsvarianten ergeben sich aus der Beschreibung und den abhängigen Ansprüchen.

In den Zeichnungen sind Ausführungsbeispiele des Erfindungsgegenstandes dargestellt und in der nachfolgenden Beschreibung erläutert. Es zeigt:
- Figur 1: einen Eiskugelbereiter gemäss des Standes der Technik;
- Figur 2: einen weiteren Eiskugelbereiter gemäss des Standes der Technik;
- Figur 3: eine Explosionsansicht eines erfindungsgemässen Portionierers;
- Figur 4a: einen Schnitt durch den Kopfbereich einer weiteren Ausführungsform gemäss der Erfindung;
- Figur 4b: eine Sicht von oben auf den Kopfbereich eines Portionierers gemäss Figur 4a; und
- Figur 5a: eine Sicht von oben auf den Kopfbereich einer weiteren Ausgestaltungsform des Portionierers, wobei die Schale geschlossen ist, und
- Figur 5b: den Portionierer gemäss Figur 5a mit geöffneter Schale.
- Figur 6a: zeigt eine weitere vorteilhafte Ausgestaltungsform des Portionierers, wobei die Schale geschlossen ist,
- Figur 6b: den Portionierer gemäss Figur 6a mit geöffneter Schale, und
- Figur 6c: zeigt einen Schnitt durch den Überlappungsbereich A-A.

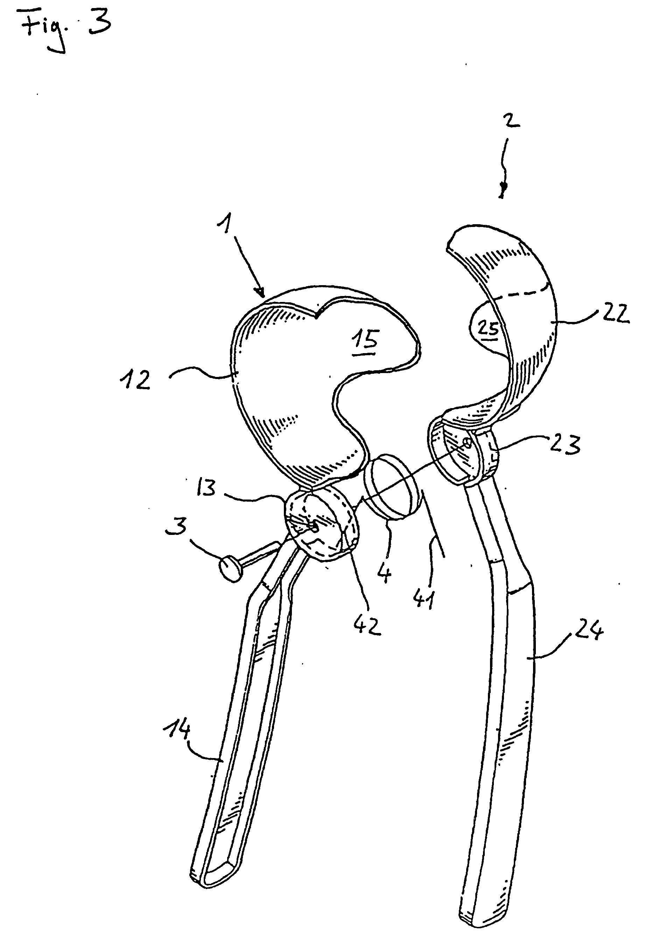

In der Figur 3 ist ein erfindungsgemässer Portionierer in seine Einzelteile zerlegt dargestellt. Zwei Schenkel 1,2 des Portionierers sind mittels einer Achse 3 schwenkbeweglich miteinander verbunden. Die einstückigen Schenkel 1,2 gliedern sich jeweils im wesentlichen in drei Bereiche. An ein vorderes Schalenteil 12,22 schliesst ein mittleres Schwenklager, welches ein Feder- und Achsgehäuse 13, 23 umfasst und darauffolgend ein hinter Handgriff 14, 24 an. Im Gegensatz zu den meisten bekannten Scheren oder Zangen sind bei dem vorliegenden Portionierer die Schenkel 1, 2 derart gestaltet, dass das Zusammendrücken der Schenkelgriffe 14, 24 das Öffnen der Schale, respektive das Auseinanderschwenken der Schalenteile 12, 22 bewirkt.

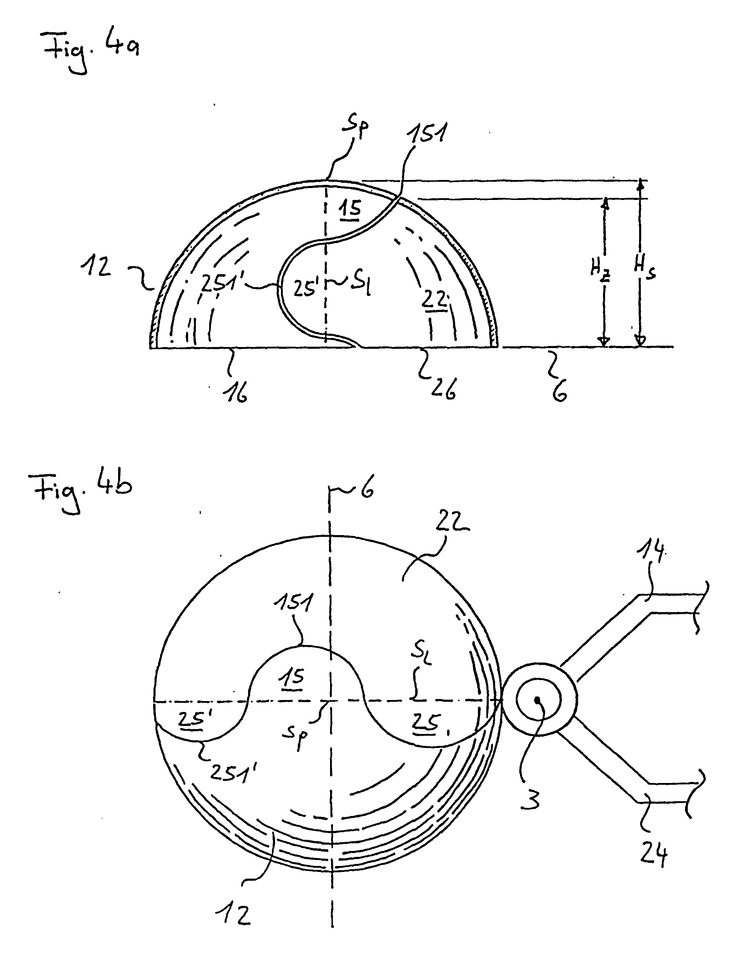

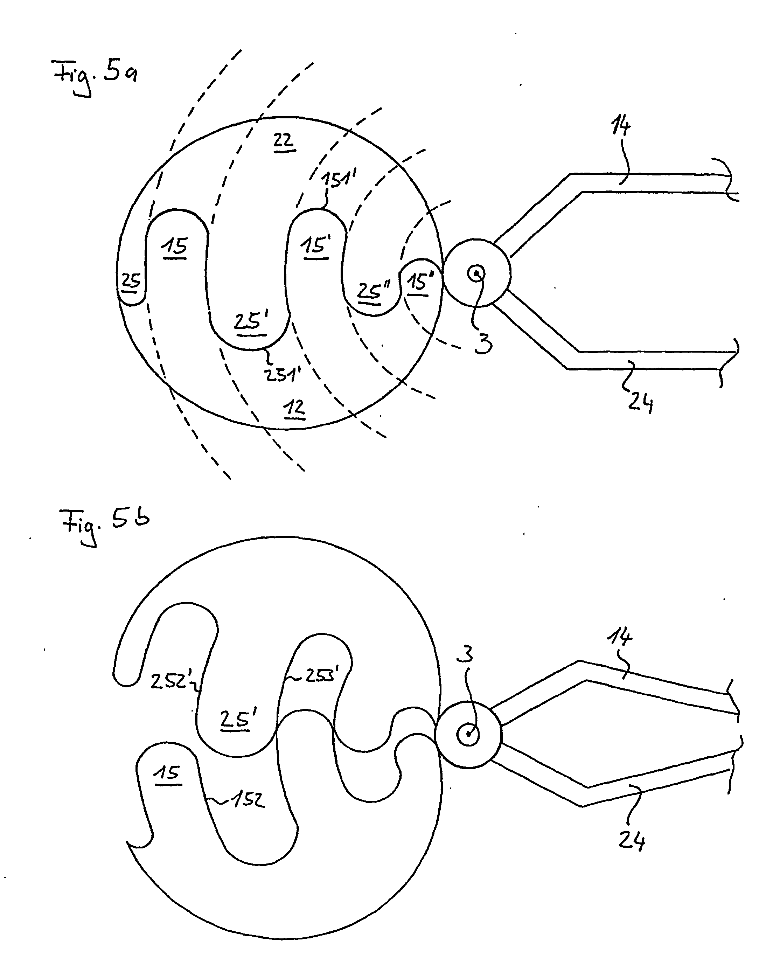

Im zusammengebauten Zustand ist im Verbindungsbereich eine Feder 4 im Federgehäuse 13,23 angeordnet. Ihre Enden 41, 42 greifen die Griffschenkel 14, 24 ein und drücken diese auseinander. Durch die Kraft der Feder 4 ist die aus den Schalenteilen 12, 22 gebildete Halbschale im Ruhezustand geschlossen. In dieser Stellung wird in bekannter Weise die zu portionierende Nahrungsmittelmasse geschöpft, bis die gewünschte Kugelform erreicht ist. Durch Zusammendrücken der Griffe 14, 24 werden, wie bereits oben erwähnt, die Schalenteile 14, 24 auseinandergeschwenkt. Die Achse der Schwenkbewegung fällt mit der Achse 3 zusammen.
Es ist wesentlich für die Erfindung, dass die Trennlinie, entlang derer sich die beiden Schalenteile 12, 22 öffnen, nicht der Scheitellinie S der Halbkugelkalotte entspricht. Wie aus den Figuren 3, 4, 5 und 6 ersichtlich ist, verläuft die Trennlinie vielmehr so, dass mindestens zwei scheitellinienübergreifende, komplementäre Finger oder Zungen 15, 25 ausgeformt sind. Wie im weiteren beschrieben wird, stellt diese besondere Gestaltung der Trennlinie, respektive der Schalenteile 12, 22, sicher, dass die geformte Kugel beim Auseinanderschwenken der Schalenteile 12, 22 zuverlässig aus der Schale befördert wird.
Im Querschnitt durch eine geschlossene Portioniererschale der Figur 4 ist der Verlauf der Trennlinie gemäss einer vorteilhaften Form der Erfindung dargestellt. Es wird deutlich, dass sich der Finger oder die Zunge 15 des Schalenteils 12 über die Scheitellinie Sl der von den beiden Schalenteilen gebildeten Schale 12, 22 in die entsprechende Aussparung im Schalenteil 22 erstreckt. Ein vorderer Rand 151 der Zunge 15, oder besser gesagt die Zungenspitze 151 liegt also bezogen auf einen unteren Schalenrand 16, 26 tiefer als der Scheitelpunkt Sp.
Bevorzugterweise ist die Höhe Hₛ des Scheitelpunktes Sp bezogen auf den unteren Schalenrand 16, 26 mindestens 5%, vorzugsweise 10% bis 20% grösser als die Höhe H_{z} der korrespondierenden Zungenspitze 151. Genaugenommen gilt dieses Verhältnis nur beim Schnitt durch den Scheitelpunkt mit der grössten Höhe, wie er in der Figur 4a dargestellt ist. Bewegt man sich auf der Scheitellinie Sl näher zum Schwenkpunkt hin oder weiter von ihm weg, so darf diese Höhendifferenz ΔHₛ-H_{z} nicht auf den Schalenunterrand 16, 26 bezogen werden, sondern sie muss auf eine Achse 6 bezogen werden, welche senkrecht zu einer durch die Scheitellinie Sl derfinierte Ebene steht und diese Ebene im Zentrum oder Brennpunkt der Schale schneidet, wie dies in der Figur 4b angedeutet ist. Statt der Höhendifferenz wird in diesen Fällen von der Entfernung Hs zwischen Scheitelpunkt und Achse 6 und der Entfernung H_{z} zwischen Zungenspitze und Achse 6, respektive der Entfernungsdifferenz ΔHₛ-H_{z} gesprochen.

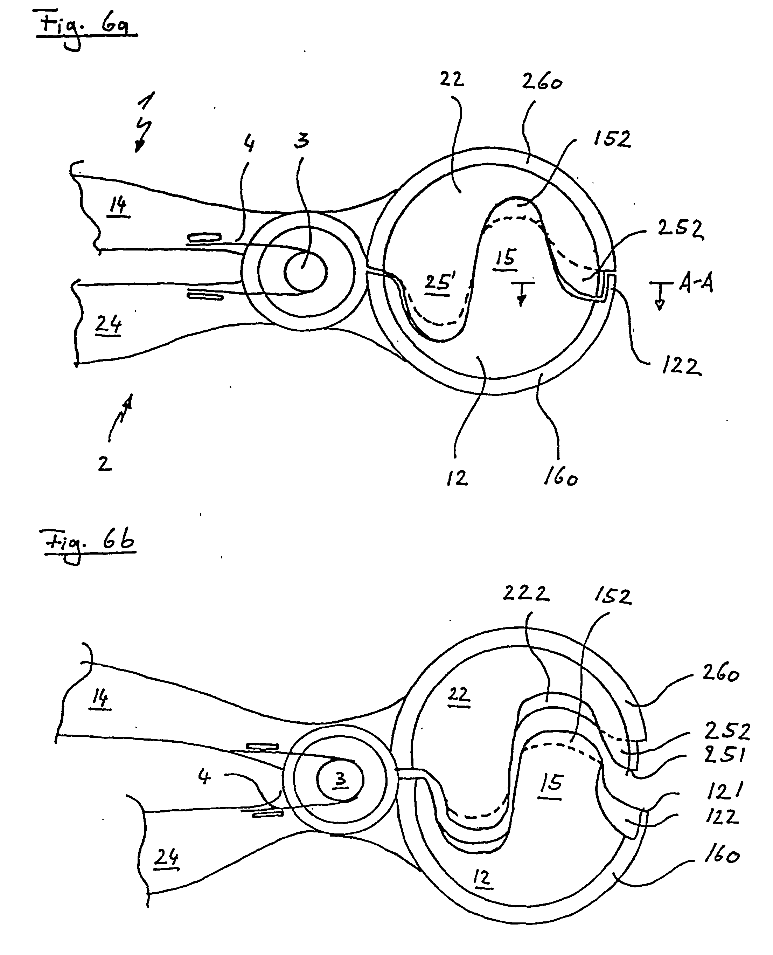

Eine in der Figur 4a nicht eingezeichnete Eiskugel liegt also im fertig geschöpften Zustand satt an der Innenwand der Schale 12, 22 an. Werden die beiden Schalenteile 12, 22 auseinanderbewegt, so drückt die Zunge 15 mit Ihrer gesamten Fläche, welche links von der Scheitellinie Sl liegt, die Eiskugel nach rechts. Gleichzeitig wird die Eiskugel von den korrespondierenden Zungen 25 und 25' des linken Schalenteiles 12 in die Gegenrichtung gedrückt. Der Eiskugel bleibt also nur der Weg nach unten. An der im Schnitt gemäss Figur 4a gezeigten Stelle wird die Eiskugel maximal um Δ Hₛ-H_{z} nach unten gedrückt. Dieser Weg genügt, um sicherzustellen, dass sich die Eiskugel von der Innenwand der Schale 12, 22 löst. Durch das Zusammenwirken der weiteren Zungen 25 löst sich die Kugel auch an anderen Stellen der Schaleninnenwand und kann nach unten fallen.
Anhand der Figur 4b, insbesondere aber anhand der Figuren 5a und 5b soll deutlich gemacht werden, dass es für die vorliegende Erfindung wesentlich ist, dass die Zungen 15, 25 oder Finger der Schalenteile in Bezug auf die Schwenkbewegung zueinander hinterschneidungsfrei geformt sind.
In der Figur 5 sind Schalenteile 12, 22 mit jeweils drei Zungen 15, 15', 15''' und 25, 25', 25''' in einer Sicht von oben gezeigt. Die Finger oder Zungen 15, 15', 15''' und 25, 25', 25''' greifen weit ineinander, ohne sich jedoch in Bezug auf die Schwenkbewegung um die Achse 3 zu hinterschneiden. Zur Verdeutlichung sind strichlinierte Kreisbögen, welche konzentrisch um die Achse 3 angeordnet sind. Die korrespondierenden Kanten 252' der Zunge 25' und 152 der Zunge 15 liegen in der Planarprojektion genau auf einem solchen Kreisbogen. Beim Oeffnen der Schale 12, 22 können sie daher problemlos aneinander entlangbewegt werden.
Eine für die Herstellung einfachere Form von Zungen weist in der Planarprojektion parallele Kanten 252', 253' auf. Eine Schale mit solchen Zungen würde sich jedoch nicht öffnen lassen, da sich die Zungen bei der Schwenkbewegung gegenseitig verklemmen würden.

Vorteilhafterweise sind die Schenkel 1, 2 aus lebensmittelzugelassenem Metall oder Kunststoff gefertigt, bruchsicher und spülmaschinenfest. Der Portionierer, und insbesondere der Schalenbereich lassen sich optimal Reinigen, da alle Oberflächen frei zugänglich sind. Nahrungsmittelreste können schnell und einfach von den Schalenteilen und auch von anderen Portioniereroberflächen entfernt werden, so dass es praktisch nicht zu unhygienischen Verschmutzungen oder Verkrustungen kommen kann.
Der Portionierer ist nicht nur sehr stabil, so dass zum Beispiel auch hart gefrorene Speiseeiskugeln sicher aus der Schale befördert werden, sondern er zeichnet sich durch ein Minimum an Bauteilen auch durch eine günstige Herstellung aus.

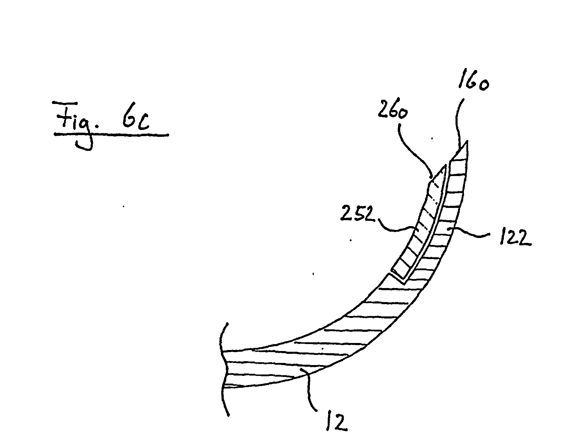

Die in der Figur 6 gezeigte weitere Ausführungsform des erfindungsgemässen Portionierers weist bevorzugt im Bereich der Zungenspitzen trennlinienübergreifende Überlappungen auf. In der Figur 6a ist die Portioniererschale im geschlossenen und in der Figur 6b im offenen Zustand dargestellt. Entgegen der oben beschriebenen Ausführungsformen sind in der dargestellten Ausführungsform Schenkel 1,2, Feder 4 und Achse 3 so ausgebildet und angeordnet, dass die Schale im Ruhezustand, wie in der Figur 6b dargestellt, geöffnet, respektive die Schalenteile 12, 22, auseinandergeschwenkt sind. Werden die Schenkelgriffe 14, 24 zusammengedrückt, so schliesst sich die Schale, die Schalenteile 12, 22 werden zusammengeschwenkt, wie dies in der Figur 6a gezeigt ist.
Aus der Figur 6 wird deutlich, dass die Schalenteile entlang der Trennlinie an mehreren Stellen im Bereich der Zungenspitzen 15, 25, 25' überlappend ausgestaltet sind. In Analogie zur Holzverbindung könnte auch von Überplattung gesprochen werden. Bei gleicher Dicke der Schalenteile 12, 22 sind die Endbereiche der Zungenspitzen 15, 25, 25' umgekehrt abgestuft. Wirft man einen Blick in das Innere der Schale, so kommt bei geschlossener Schale jeweils ein innerer Plattenteil 152, 252 einer Zunge 15, 25 eines Schalenteils 12, 22 über einem äusseren Plattenteil 222, 122 der korrespondierenden Ausnehmung im zweiten Schalenteils 22,12 zu liegen. Die Trennlinie ist dadurch verdeckt. Besonders vorteilhaft hat sich diese Ausgestaltungsform bei Portionierern aus Kunststoffmaterial erwiesen. Da deren Schalenteile eine gewisse Flexibilität aufweisen tendieren sie, vor allem beim Schöpfen von hartem Speiseeis, dazu sich zu verbiegen oder auseinander gedrückt zu werden. Die Überplattung verringert diese Tendenz ganz erheblich, da sich einerseits die Schalenteile im Trennlinienbereich gegenseitig stabilisieren und andererseits auch bei hoher Belastung kein offener Spalt zwischen den Schalenteilen entstehen kann.
Um der aus Kunststoffmaterial gefertigten Schale eine genügende Stabilität zu verleihen, ist sie relativ dick ausgebildet. Um auch noch mit solch einer Wandstärke ein einfaches Schöpfen härterer Lebensmittel zu ermöglichen, ist der Schalenunterrand 160, 260, wie in der Figur 6c dargestellt, zu einer Schöpfkante angeschrägt.

## Patentansprüche

1. Portionierer zum Formen von annähernd kugelförmigen Nahrungsmittelportionen **gekennzeichnet durch** zwei um eine Achse (3) schwenkbeweglich verbundene Schenkel (1, 2) mit jeweils einem hinteren Schenkelgriff (14, 24) einem mittleren Schwenklager (13, 23) und einem vorderen Schalenteil (12, 22), wobei die beiden Schalenteile (12, 22) eine halbkugelförmige Schale bilden, und die Schalenteile (12, 22) **durch** Zusammendrücken der Schenkelgriffe (14, 24) um die Achse (3) schwenkbar sind, und wobei eine Trennlinie, entlang derer sich die beiden Schalenteile (12, 22) öffnen, so verläuft, dass mindestens zwei scheitellinienübergreifende, komplementäre Finger oder Zungen (15, 25) auf den Schalenteilen (12, 22) ausgeformt sind, welche in Bezug auf die Schwenkbewegung zueinander hinterschneidungsfrei geformt und angeordnet sind **dadurch** gekennzeichnet, dass die Entfernung oder Höhe (Hₛ) eines Scheitelpunktes (Sp) bezogen auf eine Achse (6), mindestens 5%, vorzugsweise 10% bis 20% grösser ist als die Höhe oder Entfernung (H_{z}) einer korrespondierenden Zungenspitze (151) der mindestens einen Zunge (15), wobei beide Punkte annähernd die gleiche Entfernung von der Schwenkachse (3) aufweisen und dass sich mindestens eine Zunge (15) des Schalenteils (12) über die Scheitellinie (Sl) der von den beiden Schalenteilen gebildeten Schale (12, 22) in die entsprechende Aussparung im Schalenteil (22) erstreckt und dass sich mindestens eine Zunge (25) des Schalenteils (22) über die Scheitellinie (Sl) in die entsprechende Aussparung im Schalenteil (12) erstreckt wobei mindestens eine Zunge (15, 25) im einen und die entsprechende Aussparung im zweiten Schalenteil komplementär abgestuft sind, so dass bei geschlossener Schale ein innerer Plattenteil (152, 252) einer Zunge (15, 25) eines Schalenteils (12, 22) über einem äusseren Plattenteil (222, 122) der korrespondierenden Aussparung im zweiten Schalenteils (22,12) zu liegen kommt.

2. Portionierer gemäss Anspruch 1, **dadurch gekennzeichnet, dass** die Schalenteile (12, 22) durch Zusammendrücken der Schenkelgriffe (14, 24) um die Achse (3) auseinanderschwenkbar sind.

3. Portionierer gemäss Anspruch 1, **dadurch gekennzeichnet, dass** die Schalenteile (12, 22) durch Zusammendrücken der Schenkelgriffe (14, 24) um die Achse (3) zusammenschwenkbar sind.

4. Portionierer gemäss Anspruch 4, **dadurch gekennzeichnet, dass** eine Spitze (151) der Zunge (15) näher an der Achse (6), welche senkrecht zu einer durch die Scheitellinie (SI) derfinierten Ebene steht und diese Ebene im Zentrum oder Brennpunkt der Schale schneidet, liegt als ein Scheitelpunkt (Sp).

5. Portionierer gemäss Anspruch 1, **dadurch gekennzeichnet, dass** korrespondierenden Kanten (252', 152) benachbarter Zungen (25', 15) in Planarprojektion auf einem konzentrisch um die Schwenkachse (3) angeordneten Kreisbogen liegen und dadurch beim Oeffnen der Schale (12, 22) hinterschneidungsfrei aneinander entlangbewegbar sind.

6. Portionierer gemäss der Ansprüche 1 bis 3, **dadurch gekennzeichnet, dass** das Schwenklager zwei komplementäre Achs- und Federgehäuse (13, 23) umfasst, welche von der Achse (3) durchsetzt werden und in denen eine Feder (4) angeordnet ist, deren Enden (41, 42) in die Griffschenkel (14, 24) eingreifen und diese auseinander drücken.

7. Portionierer gemäss Anspruch 1, **dadurch gekennzeichnet, dass** die Schenkel (1, 2) aus lebensmittelzugelassenem Metall oder Kunststoff gefertigt sind.

8. Portionierer gemäss Anspruch 1, **dadurch gekennzeichnet, dass** der Schalenunterrand (16, 26, 160, 260) zu einer Schöpfkante angeschrägt ist.

## Revendications

1. Distributeur de portions visant la formation de portions d'aliments approximativement en forme de boule, **caractérisé par** deux branches (1, 2) reliés de façon à bouger par pivotement autour d'un axe (3) avec respectivement une poignée de branche à l'arrière (14, 24), un support de pivotement (13; 23) et une partie du moule à l'avant (12, 22), auquel cas les deux parties du moule (12, 22) forment un moule hémisphérique et les parties du moule (12, 22), par serrement des poignées de branche (14, 24), sont susceptibles de pivoter autour de l'axe (3) et auquel cas une ligne séparatrice, le long de laquelle les deux parties du moule (12, 22) s'ouvrent, s'écoule de telle façon qu'au moins deux doigts ou languettes (15, 25) chevauchant la ligne du sommet et complémentaires sont formés sur les parties du moule (12, 22), lesquelles en rapport avec le mouvement pivotant sont formées et arrangées l'une à l'autre de façon à être exemptes de contre-dépouille, **caractérisé par le fait que** 1a distance ou hauteur (Hₛ) d'un point culminant (Sp) par rapport à un axe (6) est plus grande d'au moins 5%, de préférence de 10% à 20%, que la hauteur ou la distance (H_{z}) d'une extrémité de languette (151) correspondante d'au moins une languette (15), auquel cas les deux points présentent approximativement la même distance de l'axe de pivotement (3), et qu'au moins une languette (15) de la partie du moule (12) s'étend dans le creux correspondant dans la partie du moule (22), au-dessus de la ligne du sommet (S1) du moule (12, 22), formé par les deux parties du moule, et qu'au moins une languette (25) de la partie du moule (22) s'étend dans le creux correspondant dans la partie du moule (12) au-dessus de la ligne du sommet (S1), auquel cas au moins une languette (15, 25) dans une partie du moule et le creux correspondant dans la deuxième partie du moule sont échelonnés de façon complémentaire, de sorte que, lors d'un moule fermé, une partie de plaque intérieure (152, 252) d'une languette (15, 25) d'une partie du moule (12, 22) vient se poser sur une partie de plaque extérieure (222, 122) du creux correspondant dans la deuxième partie du moule (22, 12).

2. Distributeur de portions selon la revendication 1, **caractérisé par le fait que** les parties du moule (12, 22) sont susceptibles d'être pivotées en éloignement l'une de l'autre autour de l'axe (3), par un serrement des poignées de branche (14, 24).

3. Distributeur de portions selon la revendication 1, **caractérisé par le fait que** les parties du moule (12, 22) sont susceptibles d'être pivotées l'une vers l'autre autour de l'axe (3) par un serrement des poignées des branches (14, 24).

4. Distributeur de portions selon la revendication 4, **caractérisé par le fait qu'**une extrémité (151) de la languette (15) est située plus près à l'axe (6) qu'un point culminant (Sp); cet axe (6) étant perpendiculaire à un plan défini par la ligne du sommet (S1) et qui coupe ce plan dans le centre ou foyer du moule.

5. Distributeur de portions selon la revendication 1, **caractérisé par le fait que** des rebords correspondants (252'; 152) de languettes avoisinantes (25'; 15) sont situées, dans la projection planaire, sur un arc de cercle concentrique arrangé autour de l'axe (3) et ainsi, lors de l'ouverture du moule (12, 22), elles sont susceptibles d'être bougées le long les unes des autres de façon à être exemptes de contre-dépouille.

6. Distributeur de portions selon les revendications de 1 à 3, **caractérisé par le fait que** le support de pivotement comprend deux boîtiers d'axe et de ressort complémentaires (13, 23), lesquels sont pénétrés par l'axe (3) et dans lesquels un ressort (4) est arrangé dont les extrémités (41, 42) s'engrènent dans les branches à poignée (14, 24) et les écartent.

7. Distributeur de portions selon la revendication 1, **caractérisé par le fait que** les branches (1, 2) sont fabriqués en métal ou dans une matière synthétique permettant l'emploi de produits alimentaires.

8. Distributeur de portions selon la revendication 1, **caractérisé par le fait que** le bord inférieur du moule (16, 26, 160, 260) est biseauté en un rebord d'extraction.

## Claims

1. A portioner for shaping approximately spherical foodstuff portions, **characterized by** two limbs (1, 2) connected in a pivotably movable manner about a pivot pin (3), with in each case a rear limb handle (14, 24), a middle pivot bearing (13, 23) and a front shell part (12,22),
wherein the two shell parts (12, 22) form a hemispherical shell, and the shell parts (12, 22) are pivotable about the pivot pin (3) by way of pressing together the limb handles (14, 24), and wherein a separating line along which the two shell parts (12, 22) open runs such that on the shell parts (11, 22) there are formed at least two complementary fingers or tongues (15, 25) overlapping the apex lines, which are shaped and arranged without any undercuts with respect to the pivoting movement to one another, **characterised in that** the distance or height (Hₛ) of an apex point (Sp) in relation to the axis (6) is at least 5%, preferably 10% to 20% larger than the height or distance (H_{z}) of a corresponding tongue tip (151) of the at least one tongue (15), wherein both points approximately have the same distance to the pivot pin (3), and that at least one tongue (15) of the shell part (12) extends over the apex line (S1) of the shell (12, 22) formed by the two shell parts into the corresponding relief in the shell part (22), and that at least one tongue (25) of the shell part (22) extends over the apex line (S1) into the corresponding relief in the shell part (12), wherein at least one tongue (15, 25) in one shell part and the corresponding relief in the second shell part are stepped in a complementary manner so that with a closed shell an inner plate part (152, 252) of a tongue (15, 25) of one shell part (12, 22) comes to lie over an outer plate part (222, 122) of the corresponding relief in the second shell part (22, 12).

2. A portioner according to claim 1, **characterized in that** the shell parts (12, 22) may be pivoted apart by pressing together the limb handles (14, 24) about the pivot pin (3).

3. A portioner according to claim 1, **characterized in that** the shell parts (12, 22) may be pivoted together by pressing together the limb handles (14, 24) about the pivot pin (3).

4. A portioner according to claim 1, **characterized in that** a tip (151) of the tongue (15) lies closer to an axis (6), which is perpendicular to a plane defined by the apex line (S1) and which intersects this plane in the centre or focal point of the shell, than an apex point (Sp).

5. A portioner according to claim 1, **characterized in that** corresponding edges (252', 152) of neighbouring tongues (25', 15) in a planar projection lie on a circular arc arranged concentrically about the pivot pin (3) and by way of this on opening the shell (12, 22) may be moved along one another without any undercuts.

6. A portioner according to one of the claims 1 to 3, **characterized in that** the pivot bearing comprises two complementary pivot pin- and spring housings (13, 23), which are passed through by the pivot pin (3) and in which there is arranged a spring (4) whose ends (41, 42) engage into the handle limbs (14, 24) and press these apart.

7. A portioner according to claim 1, **characterized in that** the limbs (1, 2) are manufactured of metal or plastic permitted for foodstuffs.

8. A portioner according to claim 1, **characterized in** the lower edge of the shell (16, 26, 160, 260) is chamfered into a shaping edge.
